# EUROPEAN PATENT SPECIFICATION

(11) **EP 1 403 331 B1**
(45) Date of publication and mention of the grant of the patent: **28.12.2005**
(21) Application number: 02425587.9
(22) Date of filing: 30.09.2002
(51) Int. Cl.: C09D 5/32, C09D 15/00, B27K 3/34, B27K 3/52

(54) **Coating, process of preparation and use thereof on woody support**
Beschichtung, ihr Herstellungsverfahren und Verwendung auf Holzsubstraten
Revêtement, son procédé de préparation et son utilisation sur des substrats en bois

(30) Priority: 20.09.2002 IT BO20020599
(43) Date of publication of application: 31.03.2004
(73) Proprietor: Arch Coatings Italia S.r.l., 40065 Pianoro BO (IT)
(72) Inventor: Benni, Stefano, 40050 Loiano (Bologna) (IT); Nanni, Alessandro, 40141 Bologna (IT); Spagna, Alessandro, 40137 Bologna (IT); Carrelli, Roberto, 40100 Bologna (IT)
(74) Representative: Tansini, Elio Fabrizio

(56) References cited:
- EP-A- 0 577 953
- EP-A- 0 943 665
- WO-A-01/17738
- US-A- 5 238 745
- US-A- 5 756 793
- US-B1- 6 207 290

## Description

The present invention relates to a coating and to a process for its preparation. In addition, the present invention relates to the use of said coating for applications on a support such as wood.

It is known about the existence on the market of a large number of coatings for external applications on a woody support. In particular in recent years, in order to reduce the emission of volatile organic substances into the environment, a series of water-based products has been developed. A group of water-based coatings for applications on wood consists of transparent coatings for external use.

It is known that the woody support and the coating undergo degradation phenomena due to atmospheric agents such as for instance solar radiation, in particular the ultraviolet component of solar radiation; heat; environment temperature; liquid humidity (rain) or gas humidity (atmospheric humidity). Moreover, it is known that a woody support exposed to sunlight undergoes a degradation process. In practice, the exposed surface takes on a gray color due to lignin degradation, which results in a higher wood porosity, a loss of structural firmness and a higher absorption of environment humidity. Such degradation involves an increase of phenomena of dimensional variation, which can be seen as surface splits. Splits or clefts make water absorption easier, which eventually results in a dark brown color and degrades little by little wood internal structure. The increase of relative humidity favors the formation of colonies of moulds or fungi.

The degradation of the woody support and of the coating, for instance a transparent coating, involves a decay in the external appearance of the coated manufactured item. Once the shielding action of the coating film is over, the degradation speed of the woody support gets higher. The practical result of this degradation is an unpleasant appearance of the coated manufactured item.

In addition, a structural decay of wood takes place, due to a subsequent splitting of the wood surface. Wood then rots because of fungi and moulds, which results in a loss of dimensional stability of the material used to build for instance an external window.

Patent US 5,238,745 discloses a bicomponent coating comprising an undercoat, which contains a phenolic antioxidant, and a conventional top coat, which preferably contains a light stabiliser, for protecting wood surfaces against light-induced degradation.

Patent US 6,207,290 discloses a coloured stain monocomponent coating for protecting wood from fouling by damaging organisms; said coating comprises an arsenic derivative, as a biocide, and an antioxidant and an ultraviolet ray absorber, which help prevent the oxidative degradation by light of said biocidal arsenic derivative, thus prolonging its antifoulant capability.

None of them provides a coating for wood having an inalterability of its aesthetical and mechanical features also after a prolonged exposition to all type of atmospheric agents.

Therefore, it is necessary to have on the market a coating or coating system without the drawbacks of the prior art.

In particular, there is the need for a coating or "combined" coating system that, in good conditions, increases the duration of the woody support, thus avoiding frequent maintenance operations.

More particularly, there is the need for a coating or combined coating system keeping its shielding aesthetical features unchanged for a longer lapse of time than the duration that can be obtained through the application on the same support of a primer and of a finishing coating such as are available on the market.

A first aim of the present invention is to provide for a coating having an inalterability of its aesthetical and mechanical features also after a prolonged exposition to atmospheric agents.

Another aim of the present invention is to provide for a coating that can shield the woody support from attacks caused by fungi, moulds and by degradation phenomena due to the action of UV rays, and by humidity absorption.

These and other aims that will be evident from the following detailed description have been achieved by the Applicant, who has found it useful to make use of a particular combination of a specific primer and a specific finishing coating.

Therefore, a first object of the present invention consists in a coating or combined coating system whose features are listed in the enclosed independent claim.

Another object of the present invention consists in a process for preparing said coating, whose features are listed in the enclosed independent claim.

A further object of the present invention consists in the use of said coating or combined coating system for applications on an woody support for external use.

The Applicant has found it useful to develop a combined coating system comprising two formulations.

The first formulation is a specific primer for obtaining a transparent coating of a woody support.

The second formulation is a specific transparent coating for finishing a woody manufactured item previously imbibed with a primer.

In general, a primer is defined as a formulation of resins, for instance acrylic resins; a solvent, for instance water and additives. A primer has a low solid residue of 10 to 35% by weight, with respect to the total amount of primer. A primer is always applied directly on wood, generally untreated wood.

Finishing coating usually refers to a formulation containing resins, for instance acrylic resins; a solvent, for instance water and additives. A transparent coating for external use has a solid residue of 30 to 60% by weight. A coating is generally applied on a woody support previously treated with a primer.

Preferably, between the application of the primer and of the finishing coating a third formulation can be applied, usually known as "filler" or intermediate product. Said third formulation is generally a coating that further joins together wood fibers so as to enable an easier sandpapering operation before applying the finishing coating.

Said first formulation, which is the object of the present invention, is a primer commonly used by people skilled in the art for obtaining a transparent coating of a wood surface, which has been added with particular compounds.

The Applicant has found it useful to add to said primer a selected wood antioxidant compound (HALS - steric hindered amines); an ultraviolet ray (UV) absorbing compound (type 3), since the result obtained is an increased protection of the woody support.

As a characterizing feature, said wood antioxidant is chosen among piperidineoxylo derivatives; for instance 4-hydroxy-2,2,6,6-tetramethylpiperidineoxylo.

Advantageously, the wood antioxidant compound is present in an amount of 0.1 to 5% by weight, with respect to the total weight of said specific first formulation.

As a further characterizing feature, the UV absorbing compound (type 3) is chosen among micronized titanium compounds; for instance micronized titanium dioxide with particles having a diameter of 1 to 50 nanometers.

Advantageously, the absorbing compound is present in an amount of 0.1 to 4% by weight.

Preferably, the primer can comprise acrylic resins or derived acrylic resins in water dispersion; additives; defoamers; fungicide substances and transparent pigments based on iron oxides.

Said second formulation, which is the object of the present invention, is a finishing coating commonly used by people skilled in the art for obtaining a transparent coating on a woody support, which has been added with particular compounds.

The Applicant has found it useful to add to said finishing coating a selected coating antioxidant compound; an ultraviolet ray (UV) absorbing compound (type 1); an ultraviolet ray (UV) absorbing compound (type 2), since the result obtained is a prolonged duration to external exposition.

In particular, said antioxidant compound for finishing coating is chosen among piperidyl derivatives; for instance bis(1,2,2,6,6-pentamethyl-4-piperidyl)-sebacate or, alternatively, methyl and 1,2,2,6,6-pentamethyl-4-piperidyl sebacate.

Advantageously, the antioxidant compound is present in an amount of 0.1 to 2%.

In particular, said UV absorbing compound (type 1) is chosen among hydroxyphenyl-benzotriazole derivatives; for instance obtained from a reaction of methyl-3-(3-2H-benzotriazol-2-yl)-5-t-butyl-4-hydroxyphenyl)-propionate in PEG 300 solvent.

Advantageously the UV (type 1) absorbing compound is present in an amount of 0.1 to 2% by weight.

In particular, said UV absorbing compound (type 2) is chosen among triazine derivatives; for instance (Tinuvin), which is a 85% solution of an active substance CAS 153519-44-9 in 1-methoxy-2-propanol.

Preferably, the finishing coating according to the present invention can comprise: a fungicide substance in an amount by weight of 0.05 to 1.5% by weight; a UV absorbing compound (type 3), as mentioned above.

Preferably, the finishing coating of the present invention can comprise a shielding solid wax. In practice, the latter is a synthetic polypropylene wax that helps to reduce the intensity of UV radiation by dispersing the latter in all directions contained in the solid angle.

Preferably, the finishing coating of the present invention can comprise iron oxides, as mentioned above. In a preferred embodiment of the invention the combined coating system can comprise a third formulation (generally known as "filler" or intermediate product), which is applied between said first and second formulation.

Said third formulation is of a type known on the market, which has been added with particular compounds. The Applicant has found it useful to add to said intermediate product: a coating antioxidant compound of the type steric hindered amine (HALS); for instance a piperidyl derivative in an amount of 0.1 to 2% by weight; a fungicide substance in an amount of 0.05 to 1.5% by weight; a UV absorbing compound (type 1) in an amount of 0.05 to 2% by weight.

In the framework of the present invention ultraviolet ray (UV) absorbing compound type 1, type and type 3 refers to a compound absorbing ultraviolet radiations in a given region of UV spectrum, each of said regions having a given range of values of radiation frequency and wave length.

Another object of the present invention is a process for preparing said combined coating system according to the teachings known to people skilled in the art.

For instance, the resin in water dispersion, for instance an acrylic resin, is introduced into a suitable vessel equipped with mixing elements. The various components are added in sequence under stirring, depending on whether said first formulation, said second formulation or said third formulation has to be prepared.

If the finishing coating (second formulation) has to be prepared, the following components are added into said vessel at room temperature in sequence under stirring: a UV absorbing compound (type 1); a coating antioxidant compound; a leveling additive; a preserving agent; a thickening additive; a defoamer additive; iron oxide pigments; a UV absorbing compound (type 3); a shielding wax and a UV absorbing compound (type 2).

If an intermediate product (third formulation) has to be prepared, the same procedure is repeated under stirring at room temperature, adding the necessary components in sequence.

A further object of the present invention is the use of the combined coating system for obtaining a transparent coating on wood manufactured items (windows, doors, balconies) for external use.

The primer according to the present invention (ready for use) is applied to a woody support, preferably sandpapered (not previously treated with chemical products) with known systems such as spraying, dipping, flow coating and paintbrush. After applying the primer the surface is left to dry for 4-16 hours. Subsequently, the surface may be slightly treated with an emery and then the finishing coating according to the present invention is applied, generally through spraying systems. The treated surface is left to dry for 10-24 hours.

Advantageously, after the primer is applied and dried, a "filler" or intermediate product (third formulation) can be applied with conventional methods. The applied filler is left to dry for 16-24 hours. Subsequently, the manufactured item can be advantageously treated with an emery and the finishing coating (second formulation) can then be applied.

### EXAMPLE OF APPLICATION

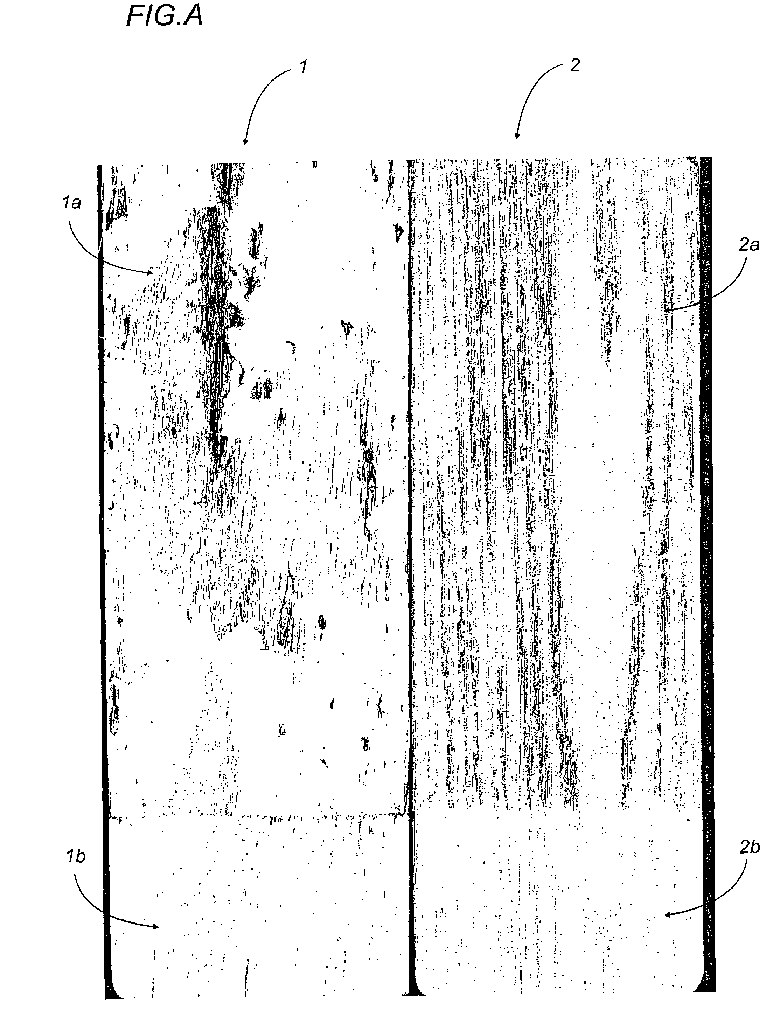

The enclosed figure FIG. A shows a comparative trial of a test comparing a durmast surface 1 treated with a conventional water-based coating system and a durmast surface 2 treated with the coating system according to the present invention.

The surface 1 has undergone an application of a water-based primer containing an acrylic resin and known additives; an application of an intermediate product "filler" containing an acrylic resin and known additives; and an application of a finishing coating containing an acrylic resin in water dispersion, a foam preventive, iron oxide, a wax and known additives.

The surface 2 has undergone an application of said first formulation; an application of said third formulation and an application of said second formulation according to the application method described above.

After drying, both surfaces 1 and 2 have been placed (keeping an inclination of 45 degrees with respect to the vertical) under the sun in southward direction in an external exposition field outside the lab QUV-Lab, Homestead Florida. The period of exposition has been of 24 months. Exposition has been continuous, night and day, for all 24 months.

The lower portion of both surfaces 1b and 2b has been shielded from the sun by means of a suitable frame, whereas the portions of both surfaces 1a and 2a have been exposed as described above.

At the end of the 24 months both surfaces have been taken and analyzed. The analysis has shown that the surface 2a treated with the system according to the present invention has a resistance to degradation which is definitely higher than surface 1a, whereas both shielded portions 1b and 2b are unchanged.

The surface 1a shows the full degradation of the coating film, which became completely detached from the support. In addition, the support shows the signs of splits and of surface degradation, as pointed out by a dark gray color. On the splits wood has taken on a black color due to the excessive absorption of humidity and to the subsequent degradation also of the wood structure. Said black areas further show a degradation due to the beginning of a proliferation of moulds and fungi.

An analysis of the surface 2a shows that the applied coating film is still substantially integral, and there is no sign of degradation of the woody support.

The results described above have never been achieved before with a transparent coating changing the natural color of wood without hiding its structure.

### EXAMPLE OF PRIMER (said first formulation)

A common primer containing an acrylic resin in water dispersion of known type 93.7% by weight, is added with: a wood antioxidant compound type HALS (derivative of piperidineoxylo) 0.4% by weight; optionally a fungicide (IPBC) 0.4% by weight; a UV absorbing compound (type 3) (dispersion of micronized titanium dioxide) 2.5% by weight; optionally a mixture of transparent iron oxides 3% by weight.

### EXAMPLE OF INTERMEDIATE PRODUCT (said third formulation)

A common intermediate product "filler" of known type containing a water dispersion of acrylic resins 98.7% by weight, is added with: a coating antioxidant compound HALS of type derivative of piperidyl 0.4% by weight; optionally a fungicide (IPBC) 0.4% by weight; a UV absorbing compound (type 1) hydroxyphenyl-benzotriazole derivative 0.5% by weight.

### EXAMPLE OF FINISHING COATING (said second formulation)

A commonly used transparent opaque finishing coating containing a dispersion of acrylic resins in water 95.35% by weight, is added with a coating antioxidant compound type HALS (steric hindered amine) piperidyl derivative 0.8% by weight; optionally a fungicide (IPBC) 0.2% by weight; a UV absorbing compound (type 1) 1% by weight; a UV absorbing compound (type 2) of type triazine derivative 0.5% by weight; optionally a UV absorbing compound (type 3) dispersion of micronized titanium dioxide 0.1% by weight; optionally a shielding wax 2% by weight; optionally a mixture of transparent iron oxides 0.05% by weight.

## Claims

1. Coating system for application on wood comprising:
- a primer containing:
- acrylic resins, or derived acrylic resins, in water dispersion;
- a wood antioxidant compound;
- a finishing coating containing:
- acrylic resins in water dispersion;
- a coating antioxidant compound, selected from piperidyl derivatives;
- an ultraviolet ray absorbing compound selected from hydroxyphenyl-benzotriazole derivatives;
- an ultraviolet ray absorbing compound selected from triazine derivatives;
**characterized in that**,
- in said primer, said wood antioxidant compound is selected from piperidineoxylo derivatives; and
- said primer further contains an ultraviolet ray absorbing compound selected from micronized titanium compounds.

2. The coating system according to claim 1, **characterized in that**, in said primer, said wood antioxidant, is 4-hydroxy-2,2,6,6-tetramethyl piperidineoxylo.

3. The coating system according to claim 1, **characterized in that**, in said primer, said ultraviolet ray absorbing compound is micronized titanium dioxide.

4. The coating system according to claim 1, in which said primer further comprises additives; foam preventives; fungicide substances and pigments based on transparent iron oxides.

5. The coating system according to claim 1, **characterized in that**, in said finishing coating, said coating antioxidant compound is selected from bis(1,2,2,6,6-pentamethyl-4-piperidyl)-sebacate; methyl and 1,2,2,6,6-penta methyl-4-piperidyl-sebacate.

6. The coating system according to claim 1, **characterized in that**, in said finishing coating, said ultraviolet ray absorbing compound, selected from hydroxyphenyl-benzotriazole derivatives, is obtained from the reaction of methyl-3-(3-(2H)benzotriazol-2-yl)-5-t-butyl-4-hydroxyphenyl) propionate in PEG 300 solvent.

7. The coating system according to claim 1, **characterized in that**, in said finishing coating, said ultraviolet ray absorbing compound, selected from triazine derivatives, is a commercial solution containing 85% of 4-(4,6-bis(2,4-dimethylphenyl)-1,3,5-triazin-2yl)-1,3-benzenediol in 1-methoxy-2-propanol.

8. The coating system according to one or more of the preceding claims, **characterized in that** said finishing coating further comprises a synthetic wax, i.e. a polypropylene wax, and/or iron oxides.

9. The coating system according to one or more of the preceding claims, in which said finishing coating further comprises a fungicide substance.

10. The coating system according to one or more of the preceding claims, **characterized in that** it further comprises a filler, comprising:
- acrylic resins in water dispersion;
- a coating antioxidant compound, which is a steric hindered amine, selected from piperidyl compounds;
- a fungicide substance;
- an ultraviolet ray absorbing compound, selected from hydroxyphenyl-benzotriazole derivatives.

11. A process for preparing said coating system according to one or more claims 1 to 10, providing for the addition in sequence of the single components into a vessel provided with mixing elements.

12. Use of the coating system according to one or more of claims 1 to 10, for obtaining a transparent coating of a wood surface.

13. A method for applying said coating system according to one or more of claims 1 to 10, comprising the following steps:
- treating a wood surface with said primer through applying systems;
- treating said wood surface with said finishing coating through applying systems.

14. The method according to claim 13, **characterized in that** said wood surface treated with said primer is then treated with said filler according to claim 10.

## Patentansprüche

1. Beschichtungssystem zur Behandlung von Holz, bestehend aus:
- einer Grundierung bestehend aus:
- Akrylharzen oder Akrylharzderivaten in Wasserverdünnung;
- einem Antioxidationsmittel für Holz;
- einer Endbeschichtung bestehend aus:
- Akrylharzderivaten in Wasserverdünnung;
- einer Antioxidans-Beschichtung, bestehend aus Piperidyl-Derivaten;
- einer UV-Licht absorbierenden Substanz, bestehend aus Hydroxyphenyl-Benzotriazol-Derivaten;
- einer UV-Licht absorbierenden Substanz, bestehend aus Triazinderivaten;
ausgezeichnet **dadurch**, dass,
- in besagter Grundierung, das genannte Holz-Antioxidationsmittel aus Piperidineoxylo-Derivaten besteht und
- besagte Grundierung des weiteren eine UV-Licht absorbierende Substanz enthält, bestehend aus mikronisierten Titansubstanzen.

2. Das Beschichtungssystem gemäß Patentanspruch 1, ausgezeichnet **dadurch**, 25dass besagtes Holz-Antioxidationsmittel in besagter Grundierung aus 4-hydroxy-2,2,5,6-tetramethyl-piperidinoxylol besteht

3. Das Beschichtungssystem gemäß Patentanspruch 1, ausgezeichnet **dadurch**, dass, in besagter Grundierung, besagte UV-Licht absorbierende Substanz 30 aus mikronisiertem Titandioxid besteht.

4. Das Beschichtungssystem gemäß Patentanspruch 1, in dem besagte Grundierung weitere Additive, schaumhemmende Mittel, Fungizidsubstanzen und auf transparenten Eisenoxiden basierende Pigmente enthält.

5. Das Beschichtungssystem gemäß Patentanspruch 1, ausgezeichnet **dadurch**, dass, in besagter Endbeschichtung, besagtes Beschichtungs-Antioxidationsmittel aus bis(1,2,2,6,6-pentamethyl-4-piperidyl)-sebacate, methyl und 1,2,2,6,6-pentamethyl-4-piperidyl-sebacate besteht.

6. Das Beschichtungssystem gemäß Patentanspruch 1, ausgezeichnet **dadurch**, dass, in besagter Endbeschichtung, besagte UV-Licht absorbierende Substanz, bestehend aus Hydroxyphenyl-Benzotriazol-Derivaten, aus der Reaktion aus methyl-3-(3(2H)benzotriazol-2-yl)-5-t-butyl-4-hydroxyphenyl) Propionat in einer PEG 300 Lösung gewonnen wurde.

7. Das Beschichtungssystem gemäß Patentanspruch 1, ausgezeichnet **dadurch**, dass, in besagter Endbeschichtung, besagte UV-Licht absorbierende Substanz, bestehend aus Triazinderivaten, eine zu 85 % aus 4-(4,6-bis(2,4-dimethylphenyl)-1,3,5-triazin-2yl)-1,3-benzenediol in 1-methoxy-2-propanol bestehende kommerzielle Lösung ist.

8. Das Beschichtungssystem gemäß einem oder mehrerer der vorgenannten Ansprüche, ausgezeichnet **dadurch**, dass besagte Endbeschichtung des weiteren ein synthetisches Wachs, d. h. ein Polypropylenwachs, und/oder Eisenoxide enthält.

9. Das Beschichtungssystem gemäß einem oder mehrerer der vorgenannten Ansprüche, bei denen besagte Endbeschichtung des weiteren eine Fungizidsubstanz enthält.

10. Das Beschichtungssystem gemäß einem oder mehrerer der vorgenannten Ansprüche, ausgezeichnet **dadurch**, dass es des weiteren ein Streckmittel enthält, bestehend aus:
- Akrylharzderivaten in Wasserverdünnung;
- einer Antioxidans-Beschichtung, d. h. einem sterisch behinderten Amin, bestehend aus Piperidyl-Substanzen;
- einer Fungizidsubstanz;
- einem UV-Licht absorbierenden Mittel, bestehend aus Hydroxyphenyl-Benzotriazol-Derivaten.

11. Ein Prozess für die Vorbereitung besagten Beschichtungssystems gemäß einem oder mehrerer der Ansprüche 1-10, der die Grundlage bildet für die sequenzielle Addition der einzelnen Komponenten in einem Gefäß mit Mischelementen.

12. Die Verwendung des Beschichtungssystems gemäß einem oder mehrerer der Ansprüche 1-10, zur Herstellung einer transparenten Beschichtung einer Holzoberfläche.

13. Eine Methode für das Aufbringen besagten Beschichtungssystems gemäß einem öder mehrerer der Ansprüche 1-10, bestehend aus folgenden Schritten:
- Aufbringen besagter Grundierung auf eine Holzoberfläche mithilfe entsprechender Hilfsmittel
- Aufbringen der Endbeschichtung auf besagte Holzoberfläche mithilfe entsprechender Hilfsmittel.

14. Die Methode gemäß Anspruch 13, ausgezeichnet **dadurch**, dass die mit besagter Grundierung behandelte besagte Holzoberfläche dann mit besagtem Streckmittel gemäß Anspruch 10 behandelt wird.

## Revendications

1. Système de revêtement à appliquer sur du bois, comprenant :
- une couche primaire contenant :
- des résines d'acrylique ou des résines d'acrylique dérivées, en dispersion aqueuse ;
- un composé antioxydant pour bois ;
- un revêtement de finition comprenant :
- des résines d'acrylique en dispersion aqueuse ;
- un composé antioxydant pour revêtement, sélectionné à partir de dérivés de piperidyl ;
- un composé absorbant les rayons ultraviolets, sélectionné à partir de dérivés de hydroxyphényl-benzotriazole ;
- un composé absorbant les rayons ultraviolets, sélectionné à partir de dérivés de triazine ;
**se caractérisant en ce que**
- dans ladite couche primaire, ledit composé antioxydant pour bois est sélectionné à partir de dérivés de pipéridinéoxylo ;
et
- ladite couche primaire contient en outre un composé absorbant les rayons ultraviolets, sélectionné à partir de dérivés de composés de titane micronisés.

2. Le système de revêtement conformément à la revendication 1, **caractérisé en ce que**, dans ladite couche primaire, ledit antioxydant pour bois est le 4-hydroxy-2,2,6,6-tétraméthyl pipéridinéoxylo.

3. Le système de revêtement conformément à la revendication 1, **caractérisé en ce que**, dans ladite couche primaire, ledit composé absorbant les rayons ultraviolets est du dioxyde de titane micronisé.

4. Le système de revêtement conformément à la revendication 1, dans lequel ladite couche primaire contient en outre des additifs ; des agents prévenant la formation de mousse ; des substances fongicides et des pigments à base d'oxydes de fer transparents.

5. Le système de revêtement conformément à la revendication 1, **caractérisé en ce que**, dans ledit revêtement de finition, ledit composé antioxydant pour revêtement est sélectionné à partir de bis(1,2,2,6,6-pentaméthyl-4-pipéridyl)-sébacate ; méthyl et 1,2,2,6,6-penta méthyl-4-pipéridyl-sébacate.

6. Le système de revêtement conformément à la revendication 1, **caractérisé en ce que**, dans ledit revêtement de finition, sélectionné à partir de dérivés de hydroxyphényl-benzotriazole, est obtenu à partir de la réaction de méthyl-3-(3-(2H)benzotriazol-2-yl)-5-t-butyl-4-hydroxyphényl) proportionné dans du solvant PEG 300.

7. Le système de revêtement conformément à la revendication 1, **caractérisé en ce que**, dans ledit revêtement de finition, ledit composé absorbant les rayons violets, sélectionné à partir de dérivés de triazine, est une solution commerciale contenant 85% de 4-(4, 6-bis (2,4-diméthylphényl)-1,3,5-triazine-2yl)-1,3-benzenediol dans 1-méthoxy-2-propanol.

8. Le système de revêtement conformément à une ou plusieurs des revendications précédentes, **caractérisé en ce que** ledit revêtement de finition comprend en outre une cire synthétique, c'est-à-dire une cire polypropylène et/ou des oxydes de fer.

9. Le système de revêtement conformément à une ou plusieurs des revendications précédentes, **caractérisé en ce que** le revêtement de finition comprend en outre une substance fongicide.

10. Le système de revêtement conformément à une ou plusieurs des revendications précédentes, **caractérisé en ce qu'**il comprend en outre un rembourrage, comprenant :
- des résines d'acrylique en dispersion aqueuse ;
- un composé antioxydant pour revêtement, qui est une amine à empêchement stérique, sélectionnée à partir de dérivés de pipéridyl ;
- une substance fongicide ;
- un composé absorbant les rayons ultraviolets, sélectionné à partir de dérivés de hydroxyphényl-benzotriazole.

11. Un processus pour préparer ledit système de revêtement conformément à une ou plusieurs des revendications 1 à 10, permettant l'ajout en séquence des composants uniques dans un récipient équipé d'éléments de mélangeage.

12. Utilisation du système de revêtement conformément à une ou plusieurs des revendications 1 à 10, pour obtenir un revêtement transparent d'une surface en bois.

13. Une méthode pour appliquer ledit système de revêtement conformément à une ou plusieurs des revendications 1 à 10, comprenant les étapes suivantes :
- traitement d'une surface en bois avec ladite couche primaire via des systèmes d'application ;
- traitement de ladite surface en bois avec ledit revêtement de finition via des systèmes d'application.

14. La méthode conformément à la revendication 13, **caractérisée en ce que** ladite surface en bois traitée avec ladite couche primaire est ensuite traitée avec ledit rembourrage conformément à la revendication 10.
